# DEMANDE DE BREVET EUROPEEN

(11) **EP 0 848 019 A1**
(43) Date de publication de la demande: **17.06.1998**
(21) Numéro de dépôt: 97402986.0
(22) Date de dépôt: 10.12.1997
(51) Int. Cl.: C08F 210/02, C08F 290/06, C08J 5/18

(54) **Copolymère éthyléne/ester (méth)acrylique de polyalkylèneglycol(éther) et film imperrespirant obtenu à partir de celui-ci**

(30) Priorité: 11.12.1996 FR 9615203
(71) Demandeur: ELF ATOCHEM S.A., 92800 Puteaux, Hauts-de-Seine (FR)
(72) Inventeur: Le Blevec, J. Marc, 64121 Serres-Castet (FR); Degrand, Michel, 18 rue Barbey d'Aurevilly, 27300 Bernay (FR)
(74) Mandataire: Pochart, François

(57) **Abrégé**

L'invention a pour objet un copolymère éthylène/ester (méth)acrylique de polyalkylèneglycol(éther) comprenant les motifs monomères suivants:
(i) de 99 à 50 % en poids d'éthylène;
(ii) de 1 à 50 % en poids d'un monomère de formule I

   CH₂=C(R₁)-COO-[CₘH₂ₘ-O]ₙ-H (I)

   dans laquelle R₁ est H ou CH₃; m est un entier qui vaut 2, 3 ou 4; n est un réel compris entre 2 et 25; et
(iii) de 0 à 20 % en poids d'un tiers monomère;
ledit copolymère présentant un poids moléculaire moyen compris entre 5 000 et 65 000.

L'invention a encore pour objet un film imperrespirant obtenu à partir de ce copolymère.

## Description

La présente invention concerne un nouveau copolymère éthylène/ester (méth)acrylique de polyalkylèneglycol(éther) et un film imperrespirant obtenu à partir de celui-ci.

On connaît de nombreux films imperrespirants; cependant leurs propriétés de perméabilité restent faibles, de même que leurs propriétés mécaniques. De plus, la plupart de ces films sont coûteux.

On recherche donc des films imperrespirants ayant une perméabilité aux gaz améliorée, et dont les autres propriétés soient satisfaisantes, notamment pour de faibles épaisseurs.

La demande EP-A-0 538 033 décrit des films qui sont des copolymères d'éthylène et d'hydroxy acrylate, ce dernier représentant de 7 à 30% en poids. L'hydroxy acrylate est par exemple l'hydroxyéthylméthacrylate (HEMA). Ce polymère peut être obtenu sous forme de films, et il est indiqué que de tels films peuvent être utilisés dans des applications qui nécessitent une bonne perméabilité à la vapeur d'eau. Cependant, les valeurs de perméabilité à la vapeur d'eau données dans les exemples sont relativement faibles, à savoir nettement inférieures à la perméabilité nécessaire pour une application film imperrespirant.

Le brevet US-P-3 494 904 décrit des copolymères qui sont obtenus à partir d'éthylène et d'esters d'acide (méth)acrylique et de polyalkylèneglycol éther. Dans ces copolymères, le groupe polyalkylèneglycol éther comprend un alkylènoxy contenant 2 ou 3 atomes de carbone, et un groupe terminal alkoxy comprenant 1 à 4 atomes de carbone. Ces copolymères sont obtenus par exemple par catalyse radicalaire mise en oeuvre dans un autoclave. Dans ces copolymères, le monomère ester de polyalkylèneglycol éther représente de 1 à 37% en poids. Ces copolymères présentent un poids moléculaire moyen compris entre 20 000 et 65 000 et sont utiles en tant que films thermorétractables. Il n'y a aucune mention de la perméabilité à la vapeur d'eau de tels films.

Le brevet JP-A-61042517 décrit un additif pour améliorer le point d'écoulement de fuel, ledit additif étant un copolymère d'éthylène, de butène et d'ester (méth)acrylique de polyalkylèneglycol, ce dernier représentant de 1 à 20% en poids du polymère final. Ces copolymères ont un poids moléculaire moyen d'environ 2500, c'est-à-dire que ces polymères ne sont pas appropriés pour être transformés en films.

Aucun de ces documents n'enseigne de film imperrespirant, c'est-à-dire perméable à la vapeur d'eau mais imperméable à l'eau, à base d'un copolymère éthylène/(méth)acrylate de polyalkylèneglycol(éther). Aucun de ces documents n'enseigne ni ne suggère donc la présente invention.

Ainsi, l'invention fournit un copolymère comprenant les motifs monomères suivants:
(i) de 99 à 50 % en poids d'éthylène;
(ii) de 1 à 50 % en poids d'un monomère de formule I

   CH₂=C(R₁)-COO-[CₘH₂ₘ-O]ₙ-H (I)

   dans laquelle:
   R₁ est H ou CH₃;
   m est un entier qui vaut 2, 3 ou 4;
   n est un réel compris entre 2 et 25; et
(iii) de 0 à 20 % en poids d'un tiers monomère;
ledit copolymère présentant un poids moléculaire moyen compris entre 5 000 et 65 000.

L'invention a aussi pour objet un film imperrespirant et un objet antistatique obtenus à partir du copolymère précité selon l'invention.

L'invention a encore pour objet un film imperrespirant obtenu à partir d'un copolymère comprenant les motifs monomères suivants:
(i) de 99 à 50 % en poids d'éthylène;
(ii) de 1 à 50 % en poids d'un monomère de formule II

   CH₂=C(R₁)-COO-[CₘH₂ₘ-O]ₙ-R₂ (II)

   dans laquelle:
   R₁ est H ou CH₃;
   m est un entier qui vaut 2, 3 ou 4;
   n est un réel compris entre 2 et 25;
   R₂ est un groupe alkyle contenant de 1 à 4 atomes de carbone; et
(iii) de 0 à 20 % en poids d'un tiers monomère;
ledit copolymère présentant un poids moléculaire moyen compris entre 5 000 et 65 000.

Le copolymère cité immédiatement ci-dessus peut aussi être utilisé pour la fabrication d'objet antistatique.

Le poids moléculaire est un poids moléculaire moyen en mnombre (MWn), tel que mesuré par GPC.

La formule CₘH₂ₘ où m vaut 2, 3 ou 4, recouvre les groupes éthylène, n- et iso-propylène, n-, iso- et tert-butylène, dans toutes les configurations stéréochimiques.

Dans les formules I et II ci-dessus, les conditions préférées sont:
m vaut 2;
R₁ est CH₃;
n est compris de préférence entre 5 et 20.

Selon un mode de réalisation préférée, le poids moléculaire moyen des copolymères est compris de préférence entre 10 000 et 25 000.

Selon un mode de réalisation préférée, le MI est compris entre 0,5 et 100, de préférence entre 1 et 10. De telles valeurs sont appropriées pour la fabrication de films.

Le MI est l'indice de fluidité (Melt Flow Index), mesuré à 190°C sous 2,16 kg, et est exprimé en g/10 mn.

Selon un autre mode de réalisation, les copolymères comprennent:
(i) de 90 à 60 % en poids d'éthylène;
(ii) de 10 à 40 % en poids d'un monomère de formule I ou II; et
(iii) de 0 à 10 % en poids d'un tiers monomère.

L'invention est maintenant décrite plus en détail dans la description qui suit.

L'éthylène est un monomère disponible en grandes quantités.

Les monomères esters (méth)acryliques de polyéthylèneglycol(éther) de formules I ou II sont disponibles dans le commerce, ou peuvent être préparés par tout procédé classique. Les monomères de formule I sont commercialisés par exemple par la société Nippon Oil sous la dénomination de Blemmer®® Le brevet US-P-3 494 904 donne des exemples de tels monomères de formule II. La variation du nombre n est obtenue par mélange approprié de groupes alkylènoxy de départ. Des mélanges de tels monomères sont aussi possibles, tant des mélanges de monomères de formule I que des mélanges de monomères de formule II que des mélanges de monomères de formule I et formule II.

A titre de tiers monomère, on peut utiliser tout tiers monomère classiquement utilisé dans l'art. Des exemples de tels tiers monomères sont : une alpha-oléfine ayant au moins 3 atomes de carbone ayant une ou plusieurs insaturation(s); un monomère styrénique; des sels ou esters d'acides carboxyliques insaturés tel que le (méth)acrylate d'alkyle; des esters vinyliques d'acides carboxyliques saturés tel que l'acétate de vinyle; anhydride maléique et époxydes insaturés notamment lorsqu'il n'y a que des monomères de formule II.

Les présents copolymères peuvent être préparés par tout procédé classique dans l'art. A titre d'exemple, on peut citer la synthèse radicalaire haute pression en autoclave telle que décrite dans le brevet US-P-3 494 904, avec un peroxyde en tant qu'initiateur. D'autres modes de synthèse peuvent cependant être utilisées, telles que par exemple dans un réacteur radicalaire haute pression.

Des mélanges de copolymères sont aussi possibles dans le cadre de l'invention.

Ces copolymères esters (méth)acryliques de polyalkylèneglycol(éther) présentent des caractéristiques d'imperméabilité à l'eau mais de perméabilité à la vapeur d'eau, le polyalkylèneglycol(éther) étant désigné comme "hydrophile", suivant l'acceptation classique pour l'homme de l'art. Les présents copolymères présentent aussi des caractéristiques d'adhésion, en particulier sur le PET.

Ces copolymères peuvent aussi être mélangés à des additifs classiques.

Les films obtenus à partir des copolymères selon l'invention sont imperrespirants, c'est-à-dire perméables à la vapeur d'eau mais imperméables à l'eau, et de façon générale perméables aux gaz mais imperméables aux liquides. Ces films peuvent être préparés selon tout procédé connu dans l'art, par exemple par extrusion. Ces films présentent une épaisseur comprise par exemple entre 5 et 500 µm, de préférence entre 10 et 250 µm. Ces films peuvent être associés à d'autres films et/ou supports.

Les films selon l'invention sont appropriés dans de multiples domaines d'application, par exemple:
- les films monocouches ou multicouches (par exemple en association avec un film EVOH sec ou un film ou support PET);
- plastiques d'adhésion en coextrusion avec des plastiques, notamment polaires;
- produits présentant une soudabilité thermique et à haute fréquence améliorée;
- produits pour impression avec des encres hydrosolubles;
- produits antistatiques;

Les films selon l'invention sont donc appropriés pour des applications aussi variées que celles dans le domaine de l'hygiène, le domaine médical, le domaine des vêtements de protection, le domaine de la sous-toîture et le domaine de l'emballage alimentaire par exemple fruits et légumes notamment ceux fraichement récoltés.

Les exemples suivants illustrent l'invention sans la limiter.

### Exemples.

Dans ces exemples, on utilise de l'éthylène et un monomère Blemmer® PE90 ou PE350 de chez Nippon Oil, de formules respectives

| | | |
|---|---|---|
| CH₂=C(CH₃)-COO-[CH₂-CH₂-O]ₙ-H | n = 2,9 | PE 90 |
| CH₂=C(CH₃)-COO-[CH₂-CH₂-O]ₙ-H | n = 11,7 | PE 350 |

Le monomère Blemmer® est introduit dans le réacteur en solution dans du toluène, l'éthylène étant introduit à l'état gazeux sous pression. La réaction est mise en oeuvre en présence d'un peroxyde, tel que perbenzoate de tertiobutyle ou perpivalate de tertiobutyle, à une concentration de 40 à 200 ppm par exemple. La température de réaction est comprise entre 165 et 235°C, tandis que la pression est comprise entre 1800 et 2000 bar. Les débits d'entrée des comonomères sont réglés de façon à obtenir la composition en masse recherchée pour le copolymère final. L'indice de fluidité à chaud MI est mesuré à 190°C, et est exprimé en g/10mn, le poids moléculaire PM étant donné en tant que poids moléculaire moyen en nombre et est exprimé en g, mesuré par GPC (Gel Permeation Chromatography).

Les résultats sont reportés dans le tableau 1 ci-après.

**Tableau 1.**

| Ex. | type de comonomère | teneur en comonomère (% en poids) | MI (190°C, g/10mn ) | PM (g) |
|---|---|---|---|---|
| 1 | PE 90 | 25-30 | 84 | 10 000 |
| 2 | PE 90 | 20-25 | 35 | 14 000 |
| 3 | PE 90 | 20-25 | 22 | 16 000 |
| 4 | PE 90 | 20-25 | 2,7 | 22 000 |
| 5 | PE 90 | 10 | 4 | 18 000 |
| 6 | PE 350 | 20 | 3 | 21 000 |

Le polymère obtenu est ensuite extrudé en filière plate en forme de films, puis la perméabilité à la vapeur d'eau est mesurée conformément aux normes ASTM 96 E (38°C, 90%HR) et ASTM 96 BW (38°C, 50%HR). La perméabilité est exprimée en gramme par m2 et par jour (g/m2/j). On détermine aussi la perméabilité à l'oxygène (21°C, 0%HR, appareil de mesure Oxtran 1000), qui est exprimée en cc par m2 par jour et par unité de pression (cc/m2/j/atm).

Les résultats sont reportés dans le tableau 2 ci-après, l'épaisseur étant indiquée en µm entre parenthèses.

**Tableau 2.**

| Ex. | perméabilité à la vapeur d'eau (g/m2/j) ASTM BW | perméabilité à la vapeur d'eau (g/m2/j) ASTM E | perméabilité à l'oxygène (cc/m2/j/atm) |
|---|---|---|---|
| 1 | 194 (96) | nd | nd |
| 5 | 121 (122) | nd | nd |
| 6 | 2141 (133) | 728 (126) | 1710 (123) |
| 6 (a) | 10000 (25) | 2700 (25) | 8500 (25) |
| nd: non déterminé (a) obtenu par interpolation | | | |

Les résultats montrent donc que les présents copolymères conduisent à des films imperrespirants, avec de plus une excellente perméabilité à l'oxygène.

Bien entendu, la présente invention n'est pas limitée aux modes de réalisation indiqués, mais est susceptible de nombreuses variantes aisément accessibles à l'homme de l'art.

## Revendications

1. Copolymère comprenant les motifs monomères suivants:
(i) de 99 à 50 % en poids d'éthylène;
(ii) de 1 à 50 % en poids d'un monomère de formule I
CH₂=C(R₁)-COO-[CₘH₂ₘ-O]ₙ-H (I)
dans laquelle:
R₁ est H ou CH₃;
m est un entier qui vaut 2, 3 ou 4;
n est un réel compris entre 2 et 25; et
(iii) de 0 à 20 % en poids d'un tiers monomère;
ledit copolymère présentant un poids moléculaire moyen compris entre 5 000 et 65 000.

2. Copolymère selon la revendication 1, dans lequel dans la formule du monomère (ii), m vaut 2.

3. Copolymère selon la revendication 1 ou 2, dans lequel dans la formule du monomère (ii), R₁ est CH₃.

4. Copolymère selon l'une quelconque des revendication 1 à 3, dans lequel dans la formule du monomère (ii), n est compris de préférence entre 5 et 20.

5. Copolymère selon l'une quelconque des revendication 1 à 4, présentant un poids moléculaire moyen compris entre 10 000 et 25 000..

6. Copolymère selon l'une quelconque des revendication 1 à 5, présentant un MI compris entre 0,5 et 100.

7. Copolymère selon l'une quelconque des revendication 1 à 6, présentant un MI compris entre 1 et 10.

8. Copolymère selon l'une quelconque des revendication 1 à 7, comprenant:
(i) de 90 à 60 % en poids d'éthylène;
(ii) de 10 à 40 % en poids d'un monomère de formule I; et
(iii) de 0 à 10 % en poids d'un tiers monomère.

9. Film imperrespirant obtenu à partir du copolymère selon l'une quelconque des revendications 1 à 8.

10. Objet antistatique obtenu à partir du copolymère selon l'une quelconque des revendications 1 à 8.

11. Film imperrespirant obtenu à partir d'un copolymère comprenant les motifs monomères suivants:
(i) de 99 à 50 % en poids d'éthylène;
(ii) de 1 à 50 % en poids d'un monomère de formule II
CH₂=C(R₁)-COO-[CₘH₂ₘ-O]ₙ-R₂ (II)
dans laquelle:
R₁ est H ou CH₃;
m est un entier qui vaut 2, 3 ou 4;
n est un réel compris entre 2 et 25;
R₂ est un groupe alkyle contenant de 1 à 4 atomes de carbone; et
(iii) de 0 à 20 % en poids d'un tiers monomère;
ledit copolymère présentant un poids moléculaire moyen compris entre 5 000 et 65 000.

12. Film imperrespirant selon la revendication 11, obtenu à partir d'un copolymère dans lequel dans la formule du monomère (ii), m vaut 2.

13. Film imperrespirant selon la revendication 11 ou 12, obtenu à partir d'un copolymère dans lequel dans la formule du monomère (ii), R₁ est CH₃.

14. Film imperrespirant selon l'une quelconque des revendication 11 à 13, obtenu à partir d'un copolymère dans lequel dans la formule du monomère (ii), n est compris de préférence entre 5 et 20.

15. Film imperrespirant selon l'une quelconque des revendication 11 à 14, obtenu à partir d'un copolymère présentant un poids moléculaire moyen compris entre 10 000 et 25 000.

16. Film imperrespirant selon l'une quelconque des revendication 11 à 15, obtenu à partir d'un copolymère présentant un MI compris entre 0,5 et 100.

17. Film imperrespirant selon l'une quelconque des revendication 11 à 16, obtenu à partir d'un copolymère présentant un MI compris entre 1 et 10.

18. Film imperrespirant selon l'une quelconque des revendication 11 à 17, obtenu à partir d'un copolymère comprenant:
(i) de 90 à 60 % en poids d'éthylène;
(ii) de 10 à 40 % en poids d'un monomère de formule II; et
(iii) de 0 à 10 % en poids d'un tiers monomère.
